**Europäisches Patentamt**

**European Patent Office**

**Office européen des brevets**

(19)

(11) Veröffentlichungsnummer: **0 338 095**
**B1**

(12) **EUROPÄISCHE PATENTSCHRIFT**

(45) Veröffentlichungstag der Patentschrift: **30.01.91**

(51) Int. Cl.$^5$: **G 01 L 3/04**

(21) Anmeldenummer: **88104403.6**

(22) Anmeldetag: **19.03.88**

(54) **Vorrichtung zum Messen von Betriebszuständen in Antriebssystemen, insbesondere von Kraftfahrzeugen und selbstfahrenden Arbeitsgeräten.**

(43) Veröffentlichungstag der Anmeldung:
**25.10.89 Patentblatt 89/43**

(45) Bekanntmachung des Hinweises auf
die Patenterteilung:
**30.01.91 Patentblatt 91/05**

(84) Benannte Vertragsstaaten:
**AT BE CH DE ES FR GB IT LI NL SE**

(56) Entgegenhaltungen:
**EP-A-0 231 665**
**EP-A-0 231 665**
**FR-A-2 275 780**
**GB-A-2 095 841**
**GB-A-2 095 841**
**US-A-3 871 215**

(73) Patentinhaber: **GKN CARDANTEC**
**INTERNATIONAL GESELLSCHAFT FUR**
**ANTRIEBSTECHNIK MBH**
**Westendhof 5**
**D-4300 Essen 1 (DE)**

(72) Erfinder: **Schedrath, Kurt, Dr. Dipl.-Ing.**
**Am Teckenberg 27**
**D-4030 Ratingen (DE)**
Erfinder: **Schlonski, Albrecht, Dr. Dipl.-Ing.**
**An der Seilerei 26**
**D-4300 Essen 18 (DE)**

(74) Vertreter: **Harwardt, Günther, Dipl.-Ing. et al**
**HARWARDT NEUMANN PATENTANWÄLTE**
**Scheerengasse 2 Postfach 1455**
**D-5200 Siegburg 2 (DE)**

EP 0 338 095 B1

Courier Press, Leamington Spa, England.

**Beschreibung**

Die Erfindung betrifft eine Vorrichtung zum Messen und Beeinflussen des jeweiligen Betriebszustandes des Antriebs eines Kraftfahrzeuges oder eines selbstfahrenden Arbeitsgerätes, die eine Einrichtung zur Messung des Verdrehwinkels als Bestandteil des Antriebsstranges aufweist, welche an beabstandeten Fixpunkten angebrachte und mit dem Antrieb rotierende Sensoren sowie mit diesen zusammenwirkende jeweils ortsfest gehaltene Gegensensoren umfaßt, wobei die gemessenen Auswertegrößen mit vorgegebenen Werten verglichen werden und diese bei Überschreiten der vorgegebenen Werte einen Impuls zum Anzeigen und/oder zum Umschalten des Antriebssystems im Sinne der Verringerung des tatsächlichen Verdrehwinkels auslöst.

Bei Antriebssystemen, insbesondere von Kraftfahrzeugen und selbstfahrenden Arbeitsgeräten, besteht dann, wenn diese gewerblich und bevorzugt im Gelände eingesetzt werden, das Bedürfnis, die Leistungsfähigkeit einerseits möglichst bis zum Grenzbereich zu nutzen und andererseits aber ständige Überlastung zu vermeiden.

Aus der GB-A-2 095 841 ist eine Vorrichtung zur Messung des Drehmomentes einer Antriebswelle bekannt. Bei dieser Vorrichtung wird die Messung über zwei dicht beieinander liegende Meßwertaufnehmer vorgenommen, wobei die Antriebswelle zu diesem Zweck zwischen den Meßpunkten in ihrem Durchmesser reduziert wurde, um eine stärkere Torsionsverdrehung zu erreichen. Die Meßvorrichtung kann eingangs oder ausgangsseitig an der Antriebswelle angeordnet sein. Von Nachteil bei dieser Ausführung sind die durch die geringe Abstandsposition der beiden Meßwertaufnehmer bedingten kleinen Verdrehwinkel, die zu einer ungenügenden Auflösung des anliegenden Drehmomentes führen.

Aus der EP-A-0 231 665 ist eine Kontrollapparatur für vierradgetriebene Fahrzeuge bekannt, die zum Beispiel auch zur Messung des Drehmomentes genutzt wird. Die Meßanordnung besteht aus zwei mit der Welle verbundenen Scheiben und diesen zugehörigen Sensoren. Die Sensoren bestehen aus Lichtempfängern und diesen gegenüberliegend angeordneten Lichtsendern, welche radial zur Welle angeordnet sind. Die Scheiben befinden sich zwischen den Sensoren und weisen entgegengesetzt gekrümmte Schlitze auf. Je nach anliegendem Drehmoment wird durch die Torsion der Antriebsachse eine Verdrehung der Schlitze gegeneinander und damit eine radiale Verlagerung des Schnittpunktes der beiden Schlitze erreicht. Durch die radiale Verlagerung des Schnittpunktes wird das Ansprechen jeweils eines anderen Sensorpaares bewirkt. Von Nachteil wirkt sich hierbei die auf einen kleinen Abstand der Scheiben begrenzte Anwendungsmöglichkeit der Sensoren aus, wodurch wiederum nur kleine Verdrehwinkel gemessen werden können. Die Genauigkeit der Messung wird zudem durch die Größe und Anzahl der Sensoren bestimmt.

Ausgehend hiervon liegt der Erfindung die Aufgabe zugrunde, eine Vorrichtung für ein Kraftfahrzeug oder ein selbstfahrendes Arbeitsgerät vorzuschlagen, die eine überwachung von Betriebszuständen im Antriebssystem erlaubt, die ohne Eingriffe in bestehende Teile des Antriebssystems, wie z.B. Getriebe zuverlässig auswertbare Meßwerte ergibt.

Diese Aufgabe wird erfindungsgemäß nach einem ersten Lösungsprinzip dadurch gelöst, daß als Fixpunkte die beiden Anschlußflansche nahe der Enden einer Kreuzgelenkwelle und/oder die benachbarten Gegenflansche vorgesehen sind und die der Auswerteeinrichtung zugeführten Auswertegrößen durch die Verschiebung der an den Fixpunkten gemessenen Maxima der Sensoren gebildet sind.

Ein alternatives Lösungsprinzip wird dadurch aufgezeigt, daß als Fixpunkte die Böden phasengleich angeordneter Lagerbüchsen nahe der Enden zweier beabstandeter Kreuzgelenke der Gelenkwelle vorgesehen sind und die der Auswerteeinrichtung zugeführten Auswertegrößen durch die Verschiebung der an den Fixpunkten gemessenen Maxima der Sensoren gebildet sind.

Durch die Wahl der Gelenkwelle als Meßglied werden Verdrehwinkel in einer Größe und Art gewonnen, die zuverlässig auswertbar sind. Die Länge der Gelenkwelle garantiert, daß ein genügend großer Verdrehwinkel zur Auswertung und Messung zur Verfügung steht. Darüberhinaus ist das Abhängigkeitsverhältnis von Verdrehwinkel und Drehmoment aufgrund der bewährten Konstruktionsprinzipien bekannt. Die Gelenkwelle wird also zur Messung quasistatischer und dynamischer Momente bei Rotation der Welle herangezogen. Die Funktion von Verdrehwinkel und Moment ist im Meßbereich bis hin zur elastischen Funktionsgrenze linear, darüberhinaus wird die Funktion bis hin zur Grenzbelastung, d.h. zum Bruch progressiv. Im elastischen Bereich, insbesondere im Linearbereich, werden Verdrehwinkel in einer Größenordnung von etwa 10 Grad erreicht.

Gelenkwellen dienen in der Regel zur Übertragung eines Drehmomentes bei Rotationen. Sie sollen Abstände zwischen zwei Antriebsteilen des Antriebssystems überbrücken und gleichzeitig auch Lageveränderungen dieser Antriebsteile zueinander ausgleichen können. Aus diesem Grunde können nicht die gemessenen Absolutwerte benutzt werden, um den Verdrehwinkel zu messen, sondern die jeweilig gemessenen Phasenverschiebungen der Maxima der beiden Meßstellen, wobei in dem Fall, daß kein Drehmoment übertragen wird die beiden Maxima in Phase liegen, also keine Verschiebung zueinander aufweisen, während bei Auftreten eines Drehmomentes die beiden gemessenen Maximawerte phasenverschoben, d.h. zeitlich verschieden, gemessen werden. Durch die Vorgehensweise werden eventuell aufgrund von Lageveränderungen oder Verformungen im Bereich des Fahrzeuges auftretende Veränderungen der Entfernung zwischen den beiden Sensorpaaren, bestehend jeweils aus Sensor und Gegensensor ausgeglichen.

Als Fixpunkte für die Sensoren werden hierbei erfindungsgemäß die beiden Anschlußflansche der Gelenkwelle und/oder die benachbarten Gegenflansche gewählt. Alternativ werden als Fixpunkte die Böden phasengleich angeordneter Lagerbüchsen zweier beabstandeter Kreuzgelenke der Gelenkwelle genutzt.

Als Sensoren zum Messen des Verdrehwinkels sind optische, permanentmagnetische oder mechanische Meßgeber und Meßempfänger vorgeschlagen.

Ferner ist vorgesehen, daß die Auswerteeinrichtung eine Zähleinrichtung zur Aufzeichnung der Häufigkeit der Grenzwerte umfaßt.

Es ist also möglich, das Erreichen der zulässigen Grenzwerte bzw. Überschreiten der zulässigen Grenzwerte zu zählen. Die Anzahl dieser erreichten Grenzwerte kann ein Maß für einen Austausch der Gelenkwelle darstellen. Es kann auch als Hinweis zur Durchführung von Wartungsintervallen genutzt werden.

Zur Messung des Verdrehwinkels können die Flansche mit einer Verzahnung versehen sein, die phasengleich angeordnet sind, wobei die Verdrehung der Zähne zueinander oder aber auch die Anzahl der während einer Zeiteinheit durchgelaufenen Zähne als Vergleichsgröße für den Verdrehwinkel dienen.

Es ist des weiteren vorgeschlagen, daß zum Betrieb eines Fahrzeuges die Auswerteeinrichtung ein Signal zur Betätigung des Schaltgetriebes des Fahrzeuges erzeugt.

Ferner sind nach der Erfindung zwei alternative Anordnungsmöglichkeiten für die Gegensensoren vorgeschlagen. Es ist für die Anordnung der Gegensensoren bei einem Kraftfahrzeug vorgesehen, diese dem entweder dem Fahrzeugaufbau, d.h. insbesondere den Rahmenquerträgern bei einem Lastkraftwagen oder der Bodengruppe bei einem Personenkraftwagen zuzuordnen, oder aber alternativ die Gegensensoren am Getriebegehäuse und am Achsgetriebegehäuse anzuordnen. Der Vorteil der Zuordnung der Gegensensoren an Fahrzeugaufbauteilen, z.B. dem Rahmenquerträger oder der Bodengruppe besteht darin, dass Federbewegungen bei Starrachsen mit gleichzeitigem Ein- oder Ausfedern der Räder rechts/links keinen Einfluß auf die Winkelmessungen haben. Dagegen kann bei gleichzeitigem Ein- oder Ausfedern der Räder die Deutlichkeit des Meßsignales durch Änderung des Abstandes zwischen drehendem und raumfesten Sensor beeinträchtigt werden.

Eine Anordnung an Getriebegehäuse und Achsgehäuse gewährleistet immer einen konstanten Abstand zwischen drehendem und raumfestem Sensor. Da bei Fahrzeugen mit Starrachsen das Achsgehäuse jedoch Federbewegungen der Antriebsachse erfährt, werden bei gegensinniger Ein- und Ausfederung der Räder rechts/links Winkel gemessen, die nicht durch die Drehmomentbelastung der Gelenkwelle entstanden sind. Diese "Meßfehler" betragen im üblichen Fall etwa 1 Grad bei einem zu messenden Maximalwinkel von 10 Grad im elastischen Lastfall. Bei Fahrzeugen mit Einzelradaufhängungen, insbesondere Personenkraftwagen und Leichttransporter, treten wegen der raumfesten Getriebe und Achsdifferentiale die oben angegebenen Besonderheiten nicht auf.

Bevorzugte Anordnungs- und Ausführungsbeispiele der Erfindung werden nachsehend anhand der Zeichnung erlömtert.

Es zeigt

Fig. 1 eine Prinzipdarstellung der Meßanordnung,

Fig. 2 eine Gelenkwelle in perspektivischer Ansicht,

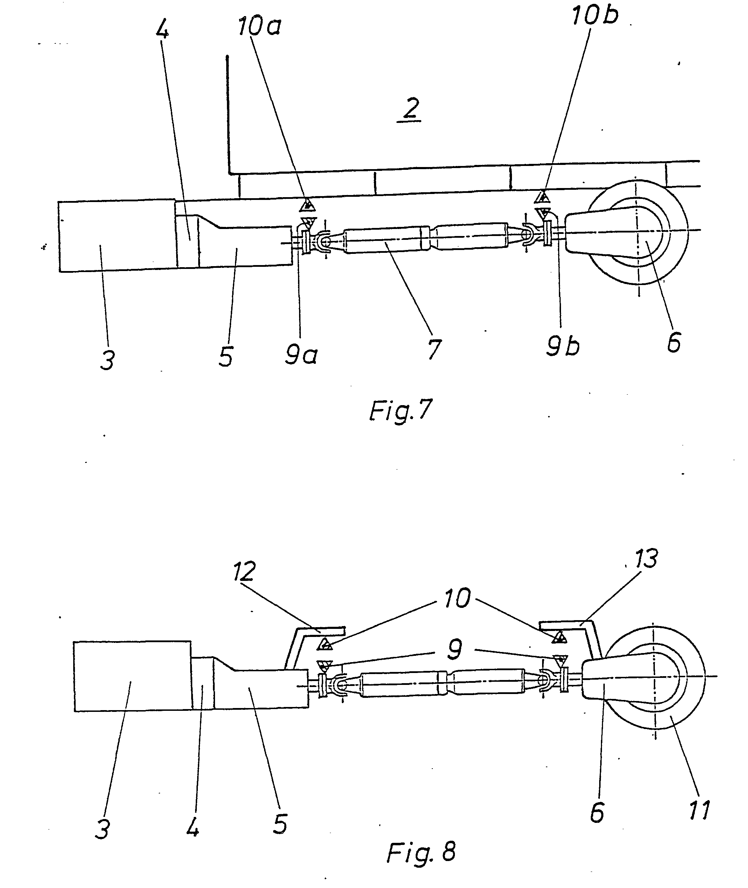

Fig. 3 eine Schemadarstellung einer ersten Anordnungsmöglichkeit der Sensoren an den Gabelflanschen der Gelenkwelle,

Fig. 4 eine Schemadarstellung einer zweiten Anordnungsmöglichkeit der Sensoren an den Anschlußflanschen von Getriebe und Achsgetriebe,

Fig. 5 eine Schemadarstellung einer dritten Anordnungsmöglichkeit der Sensoren an den Lagerbüchsen der Gelenkwelle,

Fig. 6 eine Darstellung der Gelenkwelle gemäß Fig. 5 in detaillierter Form,

Fig. 7 eine erste Anordnungsmöglichkeit der Gegensensoren bezogen auf eine Anordnung nach Fig. 3,

Fig. 8 eine zweite Anordnungsmöglichkeit der Gegensensoren bezogen auf eine Anordnung nach Fig. 3,

Fig. 9 ein typisches Drehmoment-/Verdrehwinkeldiagramm einer Gelenkwelle.

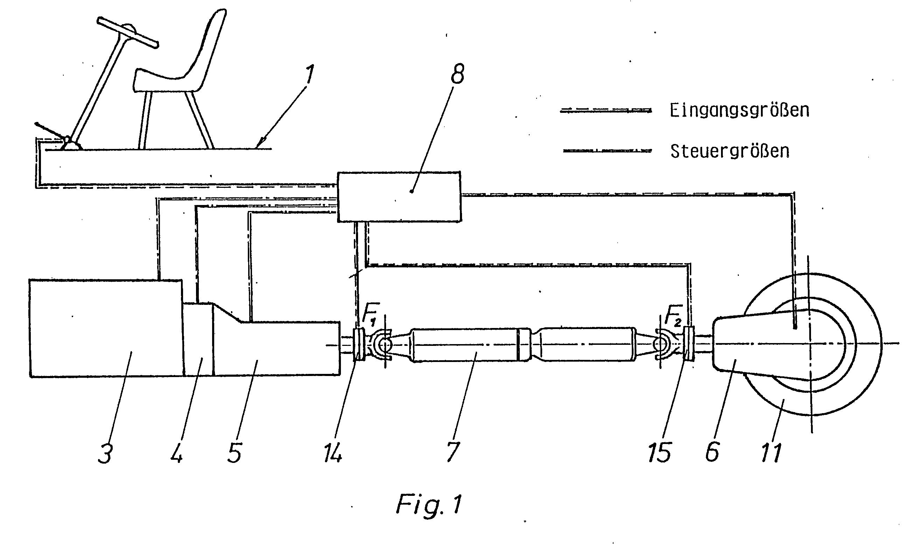

Die in Fig. 1 gezeigte Prinzipdarstellung bezieht sich auf ein Fahrzeug, von dem nur der Steuerstand dargestellt ist. Das Fahrzeug ist mit 1 bezeichnet. Als Bestandteile des Antriebssystems des Fahrzeuges 1 ist der Motor 3 mit unmittelbar daran angeschlossener Kupplung 4 und Schaltgetriebe 5 gezeigt. An den Getriebeausgang des Schaltgetriebes 5 ist die Gelenkwelle 7 an den Getriebeflansch 14 angeschlossen. Mit ihrem anderen Ende ist die Gelenkwelle 7 an den Flansch 15 des Achsgetriebes 6, das zum Antrieb des Rades 11 dient, angeschlossen. An zwei beabstandeten Fixpunkten der Gelenkwelle 7 oder unmittelbar daran anschließender Bauteile erfolgt die Messung des Verdrehwinkels der Gelenkwelle 7 zwischen den beiden Fixpunkten F1 und F2. Die Messung erfolgt über mechanische, permanentmagnetische oder optische Meßgeber und Meßempfänger. Es ist auch möglich, die Verschiebung der Phasenlage von Verzahnungen zu wählen. Die Sensoren arbeiten in der Weise, daß in einer bestimmten Stellung der drehenden und raumfesten Meßeinrichtung zueinander das Meßsignal, z.B. Magnetfeld, Licht, Strom oder Raumnocken ein Maximum aufweist. Die Verschiebung der Maxima zueinander ist eine Meßgröße für den Verdrehwinkel.

Die ermittelten Meßergebnisse werden einer Auswerteeinrichtung 8 zugeleitet, bei der zwischen den gemessenen Phasenverschiebungen und den vorgegebenen Werten eine Differenz gebildet wird und festgestellt wird, ob die vorgegebenen Werte überschritten werden. Gleichzeitig dient die Auswerteeinrichtung 8 dazu, auch bestimmte Umschaltvorgänge auszulösen, beispielweise in der Weise, daß der Motor gedrosselt wird, die Kupplung betätigt wird, um einen Schaltvorgang im Getriebe 5 auszulösen, oder aber es erfolgt nur eine optische Anzeige, die dem Bediener anzeigt, daß er im Grenzbereich oder schon im Überlastbereich arbeitet.

Die Meßergebnisse und insbesondere das Zählen der Belastungsfälle, führen zusammen mit einer Auswerteeinrichtung zu Informationen über die verbleibende Lebensdauer einzelner Bauteile und sind damit eine Anzeige für erforderliche Wartungs- und Reparaturarbeiten.

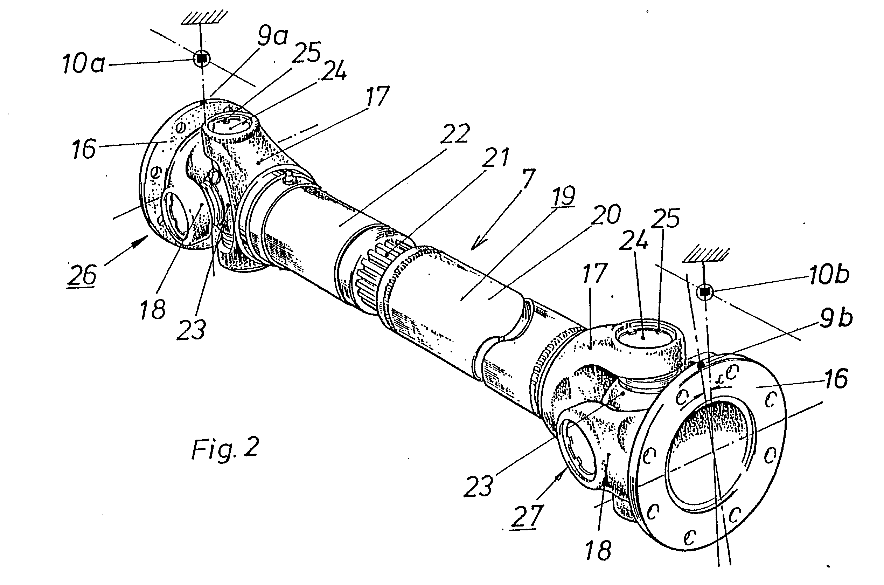

In Fig. 2 ist eine typische Gelenkwelle 7 dargestellt, die als Meßglied dienen soll. Die Gelenkwelle 7 besteht aus den beiden Kreuzgelenken 26 und 27. Jedes der beiden Kreuzgelenke 26, 27 besitzt eine der Zwischenwelle 19 zugeordnete Gelenkgabel 17, sowie eine mit einem Flansch 16 versehene Gelenkgabel 18. Jedes Kreuzgelenk 26, 27 besteht aus einem Zapfenkreuz 23, das vier rechtwinklig zueinander stehende Zapfen 21 aufweist, welche in Lagerbüchsen 24, die in Bohrungen der Flanschgabel 18 bzw. Mitnehmergabel 17 aufgenommen sind, gelagert sind. Die Lagerbüchsen 24 sind über Sicherungsringe 25 in den Bohrungen der zugehörigen Gelenkgabeln 17, 18 lagegesichert. Die Zwischenwelle 19 besteht aus einem mit der Mitnehmergabel 17 des Kreuzgelenkes 26 verbundenen Nabe, die eine verzahnte Bohrung aufweist, und einem mit der Mitnehmergabel 17 des Kreuzgelenkes 27 verbundenen Zwischenrohr 20 mit daran angeschlossenem außenverzahnten Zapfen 21, der in der verzahnten Bohrung der Nabe 22 verschiebbar, aber drehfest aufgenommen ist.

Den beiden Gabelflanschen 16 sind mit diesen umlaufende Sensoren 9a bzw. 9b zugeordnet, die mit entsprechenden Gegensensoren 10a und 10b zusammenarbeiten. Wie aus Zeichnungsfigur 2 ersichtlich, ist die Gelenkwelle 7 so dargestellt, als wenn ein Moment auf sie einwirken würde, d.h. die beiden Flansche 16 sind zueinander verdreht, so daß die beiden Sensorpaare 9a, 10a und 9b und 10b einen Verdrehwinkel $\alpha$ feststellen.

Die verschiedenen Anordnungsmöglichkeiten der Sensoren 9 und Gegensensoren 10 in Bezug auf die Gelenkwelle 7 und das Fahrzeug 1 sind anhand der Zeichnungsfiguren 3 bis 8 erläutert. Die Zeichnungsfigur 9 zeigt ein typisches Diagramm für eine Gelenkwelle, bei der der Verdrehwinkel auf der Vertikalachse und das Lastmoment auf der Horizontalachse dargestellt ist. Es ist ersichtlich, daß über einen erheblichen Drehmomentbereich eine proportionale lineare Verdrehung der Gelenkwelle stattfindet. Üblicherweise deckt dieser Linearbereich einen Verdrehwinkel von etwa 10 Grad ab. Danach verläuft die Kurve progressiv.

Die Gelenkwelle als Meßwertgeber ist für zwei Aufgabenstellungen anwendbar, nämlich als Meßwertgeber mit digitaler Aussage oder als Meßwertgeber mit analoger Aussage, d.h. einer stetigen Funktion zwischen Verdrehwinkel und Drehmoment. Als Meßwertgeber mit digitaler Aussage kann die Gelenkwelle genutzt werden, um Lastspiele oberhalb der elastischen Funktionsgrenze anzuzeigen, z.B. als Information für den Fahrer oder die Werkstatt, oder zu zählen z.B. für ein Fahrzeugdiagnosesystem. Als Meßwertgeber mit analoger Aussage kann die Gelenkwelle für die Messung des jeweiligen Drehmomentwertes im Antriebsstrang genutzt werden. Mit dem gemessenen Drehmoment steht dann ein Signal zur Verfügung, das eine wesentliche Eingangsgröße für ein elektronisches Antriebsmanagement, das ist Regelung von Motor, Kupplung und Getriebe, ist. Mit einer derartigen Regelung, basierend auf dem Drehmoment, ist eine Optimierung in Hinsicht auf den Momentenfluß in Antriebssträngen, bezüglich Überlastschutz einzelner Aggregate und Leistungsverteilung, beispielweise bei Lastkraftwagen auf die jeweiligen Achsen bei Mehrachsenantrieb oder in Hinsicht auf das Antriebs-Management bezüglich Geschwindigkeit, Beschleunigung, Kraftstoffverbrauch, Lärm- und Abgasemission, denkbar. Die Drehmomentenmessung mit der Gelenkwelle kann beispielsweise auch zur Messung der Leistungsverzweigung und auch Steuerung der Leistungsverzweigung in selbstfahrenden Arbeitsgeräten, z.B. Radlader, genutzt werden und zwar hinsichtlich Fahrzeugbewegung und Schaufelbewegung. Dabei kann auch die Auswerteeinrichtung so geschaltet werden, daß bestimmte Vorgänge einen Vorrang haben. Zum Beispiel soll die Schaufelbewegung einen Vorrang vor der Fahrbewegung haben.

Die Zeichnungsfigur 3 zeigt eine Anordnung der Gelenkwelle 7, so wie sie in Fig. 2 im Antriebssystem dargestellt ist. Die Gelenkwelle 7 ist wiederum zwischen der Antriebseinheit bestehend aus Motor 3, Kupplung 4 und Getriebe 5 und dem Achsantrieb 6 dargestellt. Die umlaufenden Sensoren 9a und 9b sind den Flanschen 16 der Gelenkwelle 7 zugeordnet.

Bei dem Ausführungsbeispiel nach Fig. 4 sind die umlaufenden Sensoren 9a und 9b nicht den Flanschen der Gelenkwelle 7 sondern den unmittelbar daran angeschlossenen Flanschen nämlich dem Getriebeflansch 14, der zur Ausgangswelle des Schaltgetriebes 5 gehört, bzw. dem Anschlußflansch 15 des Achsgetriebes 6, zugeordnet.

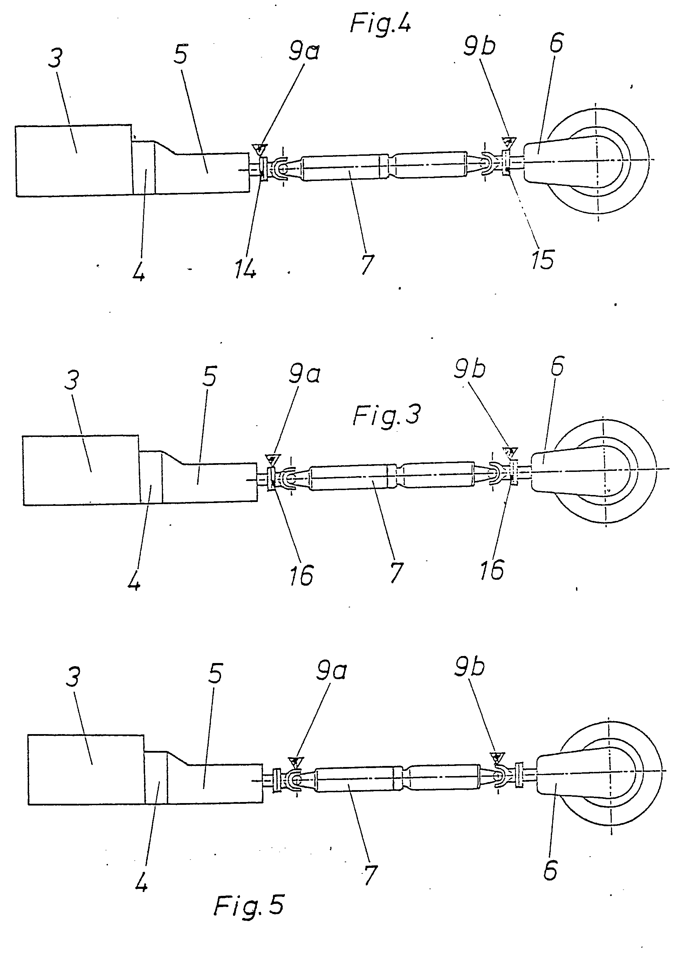

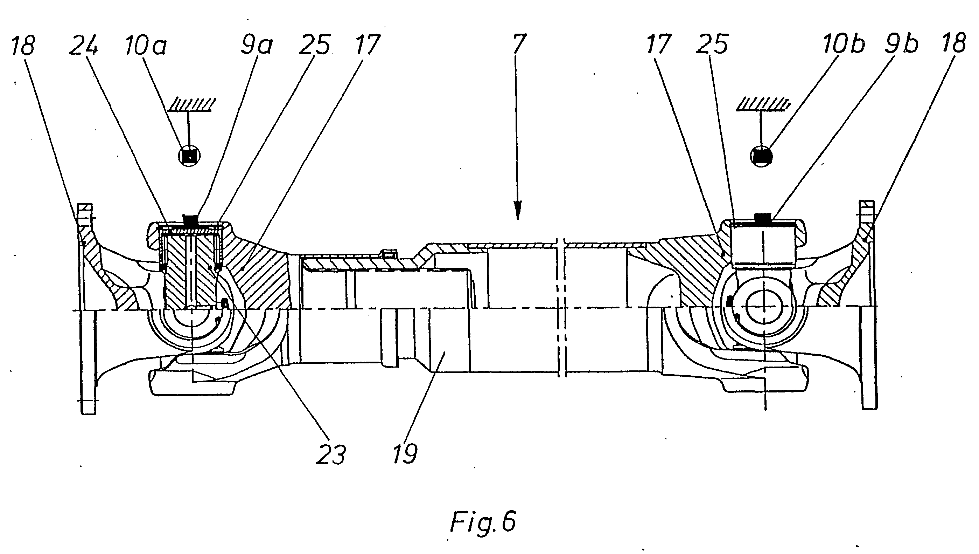

Bei dem Anordnungsbeispiel nach Fig. 5 sind die umlaufenden Sensoren 9a und 9b den Böden der Lagerbüchse der Gelenkwelle zugeordnet. Diese Zuordnung ist der Darstellung gemäß Fig. 6 näher zu entnehmen. Es ist ersichtlich, daß eine der Lagerbüchsen 24 eines jeden Kreuzgelenkes 26 und 27, welche in Phase liegen, mit einem umlaufenden Sensor 9a und 9b versehen sind. Dieser Sensor 9a bzw. 9b kann Bestandteil des Sicherungsringes 25 für die Lagerbüchse 24 sein. Schematisch ist ebenfalls der den umlaufenden Sensoren 9a und 9b jeweils zugeordnete Gegensensor 10a und 10b gezeigt.

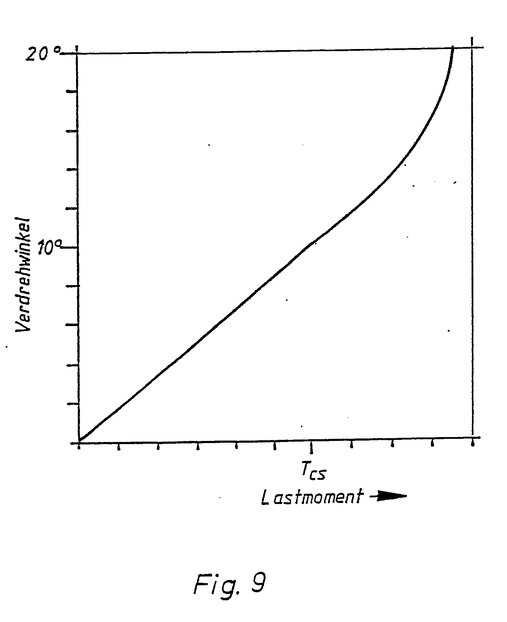

Hinsichtlich der Anordnung der Gegensensoren 10a, 10b, ergeben sich bei einem Fahrzeug, beispielsweise einem Lastkraftwagen mit Aufbau 2, verschiedene Anordnungsalternativen, die vom Prinzip her auf einen Personenkraftwagen übertragbar sind. Wie ersichtlich, sind den Sensoren 9a und 9b die Gegensensoren 10a und 10b zugeordnet. Bei dem Ausführungsbeispiel nach Fig. 7 sind die Gegensensoren am Fahrzeugaufbau 2 befestigt. Beim Ausführungsbeispiel nach Fig. 8 dagegen sind das Getriebe 5 und das Achsgetriebe 6 mit speziellen Haltern 12 und 13 versehen, an denen die Gegensensoren 10 befestigt sind.

## Patentansprüche

1. Vorrichtung zum Messen und Beeinflussen des jeweiligen Betriebszustandes des Antriebs eines Kraftfahrzeuges oder eines selbstfahrenden Arbeitsgerätes, die eine Einrichtung (9, 10) zur Messung des Verdrehwinkels (α) als Bestandteil des Antriebsstranges aufweist, welche an beabstandeten Fixpunkten angebrachte und mit dem Antrieb rotierende Sensoren (9a, b) sowie mit diesen zusammenwirkende jeweils ortsfest gehaltene Gegensensoren (10a, b) umfaßt, wobei die gemessenen Auswertegrößen mit vorgegebenen Werten verglichen werden und diese bei Überschreiten der vorgegebenen Werte einen Impuls zum Anzeigen und/oder zum Umschalten des Antriebssystems im Sinne der Verringerung des tatsächlichen Verdrehwinkels (α) auslöst, dadurch gekennzeichnet, daß als Fixpunkte die beiden Anschlußflansche (16) nahe der Enden einer Kreuzgelenkwelle (7) und/oder die benachbarten Gegenflansche (14, 15) vorgesehen sind und die der Auswerteeinrichtung (8) zugeführten Auswertegrößen durch die Verschiebung der an den Fixpunkten gemessenen Maxima der Sensoren (9a, b) gebildet sind.

2. Vorrichtung zum Messen und Beeinflussen des jeweiligen Betriebszustandes des Antriebs eines Kraftfahrzeuges oder eines selbstfahrenden Arbeitsgerätes, die eine Einrichtung (9, 10) zur Messung des Verdrehwinkels (α) als Bestandteil des Antriebsstranges aufweist, welche an beabstandeten Fixpunkten angebrachte und mit dem Antrieb rotierende Sensoren (9a, b) sowie mit diesen zusammenwirkende jeweils ortsfest gehaltene Gegensensoren (10a, b) umfaßt, wobei die gemessenen Auswertegrößen mit vorgegebenen Werten verglichen werden und diese bei Überschreiten der vorgegebenen Werte einen Impuls zum Anzeigen und/oder zum Umschalten des Antriebssystems im Sinne der Verringerung des tatsächlichen Verdrehwinkels (α) auslöst, dadurch gekennzeichnet, daß als Fixpunkte die Böden phasengleich angeordneter Lagerbüchsen (24) nahe der Enden zweier beabstandeter Kreuzgelenke (26, 27) der Gelenkwelle (7) vorgesehen sind und die der Auswerteeinrichtung (8) zugeführten Auswertegrößen durch die Verschiebung der an den Fixpunkten gemessenen Maxima der Sensoren (9a, b) gebildet sind.

3. Vorrichtung nach einem der Ansprüche 1 und 2, dadurch gekennzeichnet, daß die Sensoren (9, 10) zum Messen des Verdrehwinkels (α) als optische, permanentmagnetische oder mechanische Meßgeber und Meßempfänger ausgebildet sind.

4. Vorrichtung nach einem der Ansprüche 1 und 2, dadurch gekennzeichnet, daß die Auswerteeinrichtung (8) eine Zähleinrichtung zur Aufzeichnung der Häufigkeit der Grenzwerte umfaßt.

5. Vorrichtung nach einem der Ansprüche 1 und 2, dadurch gekennzeichnet, daß zum Betrieb eines Fahrzeuges die Auswerteeinrichtung (8) ein Signal zur Betätigung des Schaltgetriebes (5) des Fahrzeuges (1) erzeugt.

6. Vorrichtung nach Anspruch 1, dadurch gekennzeichnet, daß die Flansche (14, 15, 16) mit einer Verzahnung versehen sind.

7. Vorrichtung nach einem der vorangehenden Ansprüche, dadurch gekennzeichnet, daß die ortsfest angebrachten Gegensensoren (10) dem Fahrzeugaufbau (2), insbesondere den Rahmenträgern bei einem Lastkraftwagen oder der Bodengruppe bei einem Personenkraftwagen, zugeordnet sind.

8. Vorrichtung nach einem der vorangehenden Ansprüche, dadurch gekennzeichnet, daß die ortfest angebrachten Gegensensoren (10) dem Getriebegehäuse (5) und dem Achsgetriebegehäuse (6) zugeordnet sind.

## Revendications

1. Dispositif pour mesurer et influencer l'état de fonctionnement de l'entraînement d'un véhicule automobile ou d'outillages automobiles, ce dispositif présentant, en tant que constituant de la chaîne cinématique, un dispositif (9, 10) pour la mesure de l'angle de torsion (α), comportant des capteurs (9a, b) agencés en des points fixes écartés et tournant avec l'entraînement, et comportant des contre-capteurs (10a, b) maintenus chacun en un endroit fixe et coopérant avec les capteurs tournants, les grandeurs d'évaluation mesurées étant comparées à des valeurs prédéterminées et, en cas de dépassement des valeurs prédéterminées, une impulsion étant déclenchée pour indiquer et/ou pour commuter le système d'entraînement dans le sens de la diminution de l'angle de torsion effectif (α), caractérisé par le fait que les deux brides de raccordement (16) proches des extrémités d'un arbre à joints d'articulation à croisillons (7) et/ou les contrebrides voisines (14, 15) sont prévues en tant que points fixes, et les grandeurs d'évaluation fournies au dispositif d'interprétation (8) sont formées par le déplacement des maxima des capteurs (9a, b), mesurées aux points fixes.

2. Dispositif pour mesurer et influencer l'état de fonctionnement de l'entraînement d'un véhicule automobile ou d'outillages automobiles, ce dispositif présentant, en tant que constituant de la chaîne cinématique, un dispositif (9, 10) pour la mesure de l'angle de torsion (α), comportant des capteurs (9a, b) agencés en des points fixes écartés et tournant avec l'entraînement, et comportant des contre-capteurs (10a, b) maintenus chacun en un endroit fixe et coopérant avec les capteurs tournants, les grandeurs d'évaluation mesurées étant comparées à des valeurs prédéterminées et, en cas de dépassement des valeurs prédéterminées, une impulsion étant déclenchée pour indiquer et/ou pour commuter le système d'entraînement dans le sens de la diminution de l'angle de torsion effectif (α), caractérisé par le fait que les fonds de coussinets (24) agencés avec une même phase, à proximité des extrémités de deux joints à croisillons (26, 27) de l'arbre à joints d'articulation (7) sont prévus en tant que points fixes, et les grandeurs d'évaluation transmises au dispositif d'interprétation (8) sont formées par le déplacement des maxima des capteurs (9a, b) mesurés aux points fixes.

3. Dispositif selon l'une des revendications 1 et 2, caractérisé par le fait que les capteurs (9, 10) pour la mesure de l'angle de torsion (α) sont réalisés en tant qu'émetteurs et récepteurs de mesure optiques, à magnétisme permanent ou mécaniques.

4. Dispositif selon l'une des revendications 1 et 2, caractérisé par le fait que le dispositif d'interprétation (8) comporte un dispositif de comptage pour l'enregistrement de la fréquence des valeurs-limites.

5. Dispositif selon l'une des revendications 1 et 2, caractérisé par le fait que, pour le fonctionnement d'un véhicule automobile, le dispositif d'interprétation (8) engendre un signal pour l'actionnement de la boîte de vitesses (5) du véhicule automobile (1).

6. Dispositif selon revendication 1, caractérisé par le fait que les brides (14, 15, 16) sont munies d'une denture.

7. Dispositif selon l'une des revendications précédentes, caractérisé par le fait que les contre-capteurs (10) agencés en des endroits fixes sont conjugués à la structure (2) du véhicule, notamment aux poutres en cadre dans le cas d'un véhicule de charge, ou au groupe de plancher dans le cas d'un véhicule de tourisme.

8. Dispositif selon l'une des revendications précédentes, caractérisé par le fait que les contre-capteurs (10) agencés en des endroits fixes sont conjugués au carter de la boîte de vitesses (5) et au carter du mécanisme de transmission d'essieu (6).

**Claims**

1. Means for measuring and influencing the respective operating condition of the drive of a motor vehicle or self-propelled operating appliance, which comprise a device (9, 10) for measuring the angle of twisting (α) as part of the driveline and which comprise sensors (9a, b) secured at spaced fixing points and rotating together with the drive as well as counter sensors (10a, b) cooperating with the sensors (9a, b) and held so as to be stationary, with the measured values being compared with predetermined values and with the above device releasing a pulse for indicating and/or switching the drive system in the sense of reducing the actual angle of twisting (α) if the predetermined values are exceeded, characterised in that the fixing points are formed by the two connecting flanges (16) near the ends of a universal joint (7) and/or the adjoining counter flanges (14, 15) and that measured values fed into the evaluation device (8) are formed by the displacement of the maxima of the sensors (9a, b) measured at the fixing points.

2. Means for measuring and influencing the respective operating condition of the drive of a motor vehicle or self-propelled operating appliance, which comprise a device (9, 10) for measuring the angle of twisting (α) as part of the driveline and which comprise sensors (9a, b) secured at spaced fixing points and rotating together with the drive as well as counter sensors (10a, b) cooperating with the sensors (9a, b) and held so as to be stationary, with the measured values being compared with predetermined values and with the above device releasing a pulse for indicating and/or switching the drive system in the sense of reducing the actual angle of twisting (α) if the predetermined values are exceeded, characterised in that the fixing points are formed by the bottom parts of bearing bushes (24) arranged so as to be in-phase near the ends of two spaced univeral joints (26, 27) of the driveshaft (7) and that the measured values fed into the evaluation device (8) are formed by the displacement of the maxima of the sensors (9a, b) measured at the fixing points.

3. Means according to one of claims 1 and 2, characterised in that the sensors (9, 10) for measuring the angle of twisting (α) are designed as optical, permanently magnetic or mechanical transmitters and receivers.

4. Means according to one of claims 1 and 2, characterised in that the evaluation device (8) comprises a counting device for recording the frequency of limit values.

5. Means according to one of claims 1 and 2, characterised in that for operating the vehicle, the evaluation device (8) generates a signal for actuating the gearbox (5) of the vehicle (1).

6. Means according to claim 1, characterised in that the flanges (14, 15, 16) are provided with teeth.

7. Means according to one of the preceding claims, characterised in that the counter sensors (10) secured so as to be stationary are associated with the vehicle body (2), especially the frame carriers in the case of a truck or with the floor assembly in the case of a passenger car.

8. Means according to one of the preceding claims, characterised in that the counter sensors (10) secured so as to be stationary are associated with the gearbox housing (5) and the axle drive housing (6).

Eingangsgrößen

Steuergrößen

Fig. 1

Fig.2

Fig.7

Fig. 8

Fig.4

Fig.3

Fig.5

4

Fig. 6

EP 0 338 095 B1

Fig. 9